# EUROPEAN PATENT APPLICATION

(11) **EP 3 886 533 A1**
(43) Date of publication of application: **29.09.2021**
(21) Application number: 20172332.7
(22) Date of filing: 30.04.2020
(51) Int. Cl.: H05B 1/02, H05B 3/14, H05B 3/56, F24H 9/18

(54) **HEATING CABLE FOR HEATING, AND HEAT TRANSFER PIPE FOR HEATING USING THE SAME**

(30) Priority: 25.03.2020 KR 20200036069
(71) Applicant: Woosinenc Co., Ltd., Gyeonggi-do 18555 (KR)
(72) Inventor: KIM, Seong Ahn, Hwaseong-si, Gyeonggi-do 18537 (KR)
(74) Representative: Viering, Jentschura & Partner mbB Patent- und Rechtsanwälte

(57) **Abstract**

The present invention relates to a heating cable for heating and a heat transfer pipe for heating using the same, and more specifically, to a heating cable for heating and a heat transfer pipe for heating using the same, which can prevent air pollution and are very helpful for healthcare as far infrared rays and anions are emitted by configuring a carbon fiber in the heat transfer pipe for heating used in an electric boiler system that uses electric energy for heating.

Particularly, the present invention may fundamentally prevent the problems generated in a method of directly connecting a power supply to a carbon fiber, by configuring a heating wire for receiving power and generating heat, and configuring the carbon fiber to absorbs heat energy emitted from the heating wire and emit far infrared rays and anions.

The present invention may prevent freezing and bursting of the heat transfer pipe using minimum power during non-heating such as going out or the like, by configuring a high-temperature heating cable for heating and a low-temperature carbon heater and preventing the freezing and bursting using the carbon heater during non-heating.

Accordingly, it is possible to improve reliability and competitiveness in the field of indoor heating, in the field of boiler system, and particularly in the field of heating and boiler system using electricity, as well as in the similar or related fields.

## Description

### BACKGROUND OF THE INVENTION

### Field of the Invention

The present invention relates to a heating cable for heating and a heat transfer pipe for heating using the same, and more specifically, to a heating cable for heating and a heat transfer pipe for heating using the same, which can prevent air pollution and are very helpful for healthcare as far infrared rays and anions are emitted by configuring a carbon fiber in the heat transfer pipe for heating used in an electric boiler system that uses electric energy for heating.

Particularly, the present invention relates to a heating cable for heating and a heat transfer pipe for heating using the same, which can fundamentally prevent the problems generated in a method of directly connecting a power supply to a carbon fiber, by configuring a heating wire for receiving power and generating heat, and configuring the carbon fiber to absorbs heat energy emitted from the heating wire and emit far infrared rays and anions.

### Background of the Related Art

The most typical floor-heating (Ondol) system among indoor heating systems generally refers to a system that supplies heat to the floor of a room and uses the heat to increase the temperature of the room, and a boiler system most widely used among the heating systems heats up heating water using the heat generated when burning fuel such as oil or gas, and increases indoor temperature by supplying the high temperature heating water heated in this manner to hot water pipes installed inside the floor of the room.

Such a combustion-type boiler system supplies heat energy generated by combustion of fuel to the heating water in a heat exchange method, and is disadvantageous in that a considerable amount of heat energy is lost in the process of exchanging heat.

In addition, the combustion-type boiler system has a problem in that air pollutants such as NOx or the like are generated in the process of burning fuel.

To solve these problems, boiler systems using electricity (hereinafter, referred to as an 'electric boiler system') are distributed recently, and such electric boiler systems may solve various disadvantages that occur in the combustion-type boiler systems as electric energy is used.

As an example of the electric boiler system, Korean Patent Registration No. 10-1623545, which is a prior art document described below, discloses a 'Heat transfer pipe' having a heating wire and a heating medium inside a pipe, both sides of which in the longitudinal direction are sealed, and formed in a structure of supplying power to the heating wire through covers formed on both sides of the pipe in a method of heating the heating medium using heat energy generated from the heating wire and supplying the heat energy into the room through the heating medium.

Recently, consumers' interest in eco-friendliness and healthcare is increasing rapidly.

In response to consumers' request, heat transfer pipes for heating using a carbon fiber that generates far infrared rays and anions are also developed for the electric boiler systems.

However, when a carbon fiber is used, problems such as disconnection, overheating or the like may occur in the connector portions connected to a power supply due to breakage of the fiber or the like, and therefore, there is a problem in that a product is burnt out or a fire breaks out in severe cases.
(Patent Document 1) Korean Patent Registration No. 10-1623545, 'Heat transfer pipe'

### SUMMARY OF THE INVENTION

Accordingly, the present invention has been made in view of the above-mentioned problems occurring in the prior art, and it is an object of the present invention to provide a heating cable for heating and a heat transfer pipe for heating using the same, which can prevent air pollution and are very helpful for healthcare as far infrared rays and anions are emitted by configuring a carbon fiber in the heat transfer pipe for heating used in an electric boiler system that uses electric energy for heating.

It is another object of the present invention to provide a heating cable for heating and a heat transfer pipe for heating using the same, which can fundamentally prevent the problems generated in a method of directly connecting a power supply to a carbon fiber, by configuring a heating wire for receiving power and generating heat, and configuring the carbon fiber to absorbs heat energy emitted from the heating wire and emit far infrared rays and anions.

It is still another object of the present invention to provide a heating cable for heating and a heat transfer pipe for heating using the same, which can prevent freezing and bursting of the heat transfer pipe using minimum power during non-heating such as going out or the like, by configuring a high-temperature heating cable for heating and a low-temperature carbon heater and preventing the freezing and bursting using the carbon heater during non-heating.

To accomplish the above objects, a heating cable for heating according to the present invention includes: a heating core disposed at the center of the heating cable to receive commercial power and emit heat; an insulator forming an outer appearance of the heating cable; and a carbon fiber formed between the heating core and the insulator to absorb at least some of heat energy emitted from the heating core and emit at least one among anions and far infrared rays.

In addition, the carbon fiber may be formed to wrap the outer surface of the heating core.

In addition, the insulator includes: a first insulation cloth formed to wrap the heating core; and a second insulation cloth formed to wrap the first insulator (→ insulation cloth), and the carbon fiber may be formed between the first insulation cloth and the second insulation cloth.

In addition, a heat transfer pipe for heating using a heating cable for heating according to the present invention includes: a hollow heating pipe, both ends of which are sealed with a sealing cover, filled with heating water inside thereof; and the heating cable for heating formed inside the heating pipe.

In addition, the heating core may pass through at least one of the two sealing covers formed on both sides of the heating pipe and be connected to an external power, and the carbon fiber may be formed in at least a portion between the two sealing covers formed on both sides of the heating pipe.

In addition, the heat transfer pipe may further include a carbon heating wire formed inside the heating pipe and operating to be independent from the heating cable for heating.

In addition, the heat transfer pipe may further include: a water temperature sensor formed on one side of the heating pipe to measure the temperature of the heating water; a switching unit for supplying or blocking commercial power to or from at least one among the heating cable for heating and the carbon heating wire; and a heating control unit for controlling operation of the switching unit according to the temperature of the heating water measured by the water temperature sensor to operate at least one among the heating cable for heating and the carbon heating wire.

In addition, the heating control unit may operate the carbon heating wire for low-temperature heating, and operate the heating cable for heating for high-temperature heating.

In addition, the heating control unit may perform communication with a heating controller handled by a user through an IoT-based sensor network, operate the carbon wire during non-heating, and operate the heating cable for heating during heating.

In addition, the heating control unit may operate the carbon heating wire when the temperature of the heating water measured by the water temperature sensor is lower than a freezing temperature and higher than a minimum warming request temperature, and operate the heating cable for heating when the temperature of the heating water is lower than the minimum warming request temperature.

### BRIEF DESCRIPTION OF THE DRAWINGS

FIG. 1 is a configuration view showing an embodiment of a heating cable for heating according to the present invention.
FIG. 2 is a configuration view showing another embodiment of FIG. 1.
FIG. 3 is a configuration view showing an embodiment of a heat transfer pipe for heating using a heating cable for heating according to the present invention.
FIG. 4 is a configuration view showing another embodiment of FIG. 3.
FIG. 5 is a configuration view showing still another embodiment of FIG. 3.
FIG. 6 is a flowchart illustrating an embodiment of a method of controlling the heating control unit shown in FIG. 5.
FIG. 7 is a flowchart illustrating another embodiment of FIG. 6.

**DESCRIPTION OF SYMBOLS**

| | |
|---|---|
| A: Heat transfer pipe for heating | |
| 100: Heating cable for heating | |
| 110: Heating core | 120: Insulator |
| 121: First insulation cloth | 122: Second insulation cloth |
| 130: Carbon fiber | |
| 200: Heating pipe | 210: Sealing cover |
| 300: Carbon heating wire | |
| 310: Carbon core | 320: Insulator |
| 410: Water temperature sensor | 430: Heating control unit |
| 420: Switching unit | 440: Commercial power |

### DETAILED DESCRIPTION OF THE PREFERRED EMBODIMENT

Examples of a heating cable for heating and a heat transfer pipe for heating using the same according to the present invention may be diversely applied, and the most preferred embodiment will be described below with reference to the accompanying drawings.

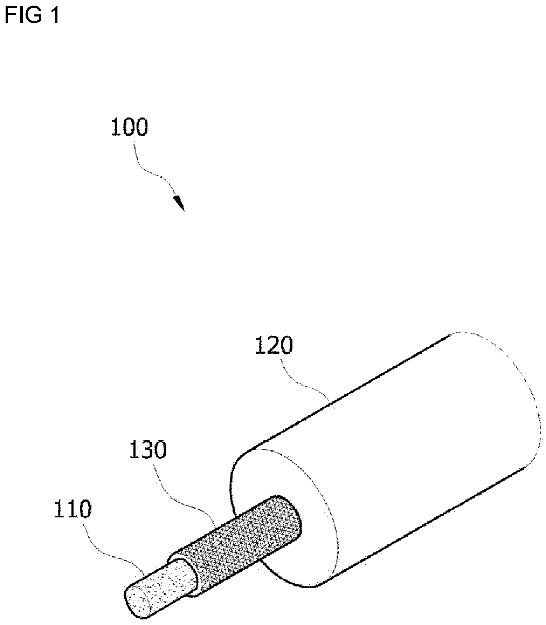

FIG. 1 is a configuration view showing an embodiment of a heating cable for heating according to the present invention.

Referring to FIG. 1, a heating cable 100 for heating of the present invention includes a heating core 110, an insulator 120, and a carbon fiber 130.

The heating core 110 is disposed in the longitudinal direction at the center of the heating cable 100 to receive commercial power from the outside and emit heat.

The insulator 120 forms an outer appearance of the heating cable 100, and may be made of a material having insulation performance for blocking electricity and heat resistance for enduring heat energy emitted from the heating core 110.

The carbon fiber 130 is formed between the heating core 110 and the insulator 120 to absorb at least some of heat energy emitted from the heating core 110 and emit at least one among anions and far infrared rays.

For example, the carbon fiber 130 may be formed to wrap the outer surface of the heating core 110 as shown in FIG. 1.

Accordingly, the carbon fiber 130 may absorb some of the heat energy generated by the heating core 110 and emit radiant heat, together with far infrared rays and anions.

On the other hand, since the carbon fiber 130 also has a property of flowing electricity well, some of the electricity supplied to the heating core 110 may also flow to the carbon fiber 130 as it is formed to contact with the heating core 110.

At this point, since the carbon fiber 130 is in surface contact with the heating core 110, although some fiber yarn of the carbon fiber 130 is cut, smooth flow of electricity may be maintained.

Since the problem generated by directly supplying electricity to both sides of the carbon fiber 130 as described above is generated as the flow of electricity is not smooth since some fiber yarn of the carbon fiber 130 is cut while the electricity is connected to both sides of the carbon fiber 130 configured in the form of a line, when it is configured to wrap the carbon fiber 130 around the outer surface of the heating core 110 as shown in FIG. 1, the problem generated as the fiber yarn of the carbon fiber 130 is cut can be minimized.

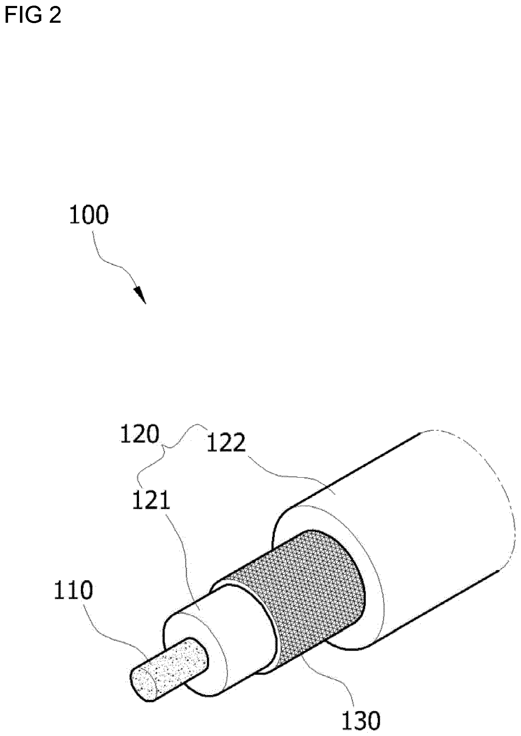

FIG. 2 is a configuration view showing another embodiment of FIG. 1.

Referring to FIG. 2, the insulator 120 may include a first insulation cloth 121 formed to wrap the heating core 110, and a second insulation cloth 122 formed to wrap the first insulator (→ insulation cloth) 121.

Further, the carbon fiber 130 may be formed between the first insulation cloth 121 and the second insulation cloth 122, in other words, on the outer surface of the first insulation cloth 121.

As described above, when the first insulation cloth 121 is formed between the heating core 110 and the carbon fiber 130, it is possible to prevent some of the electricity supplied to the heating core 110 from flowing through the carbon fiber 130, and thus the problem that may occur as the electricity flows through the carbon fiber 130 can be fundamentally blocked.

As a result, the carbon fiber 130 shown in FIG. 2 may absorb at least some of the heat energy generated by the heating core 110 and emit far infrared rays, anions, and radiant heat, while fundamentally blocking supply of electricity.

Hereinafter, the heat transfer pipe for heating using the heating cable for heating described above will be described, and since the configuration of a heating system (boiler system) including the heat transfer pipe for heating can be diversely applied by the request of those skilled in the art, it is not limited to a specific one.

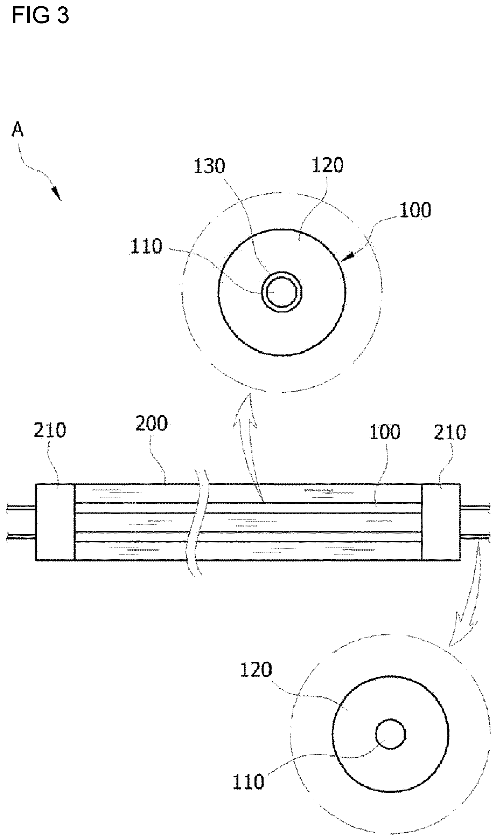

FIG. 3 is a configuration view showing an embodiment of a heat transfer pipe for heating using a heating cable for heating according to the present invention.

Referring to FIG. 3, a heat transfer pipe A for heating of the present invention includes a heating pipe 200, and the heating cable 100 for heating of any one of FIGS. 1 and 2.

The heating pipe 200 is a hollow pipe, both ends of which are sealed with a sealing cover 210, which is filled with heating water inside thereof, has heat resistance, and may be formed as a reinforced synthetic resin pipe (XL-Pipe; PE pipe) for manufacturing convenience.

In addition, the heating cable 100 for heating described above is formed inside the heating pipe 200, and heating water for heating may be filled therein.

Meanwhile, since the heating core 110 of the heating cable 100 should be connected to an external commercial power (external power), it may pass through at least one of the two sealing covers 210 formed on both sides of the heating pipe 200 as shown in the enlarged view displayed in the lower portion of FIG. 3, to be connected to the external power.

At this point, since the carbon fiber 130 is not connected to the external power, it may not be extended to the outside of the sealing cover 210, and formed in at least a portion between the two sealing covers 210 formed on both sides of the heating pipe 200.

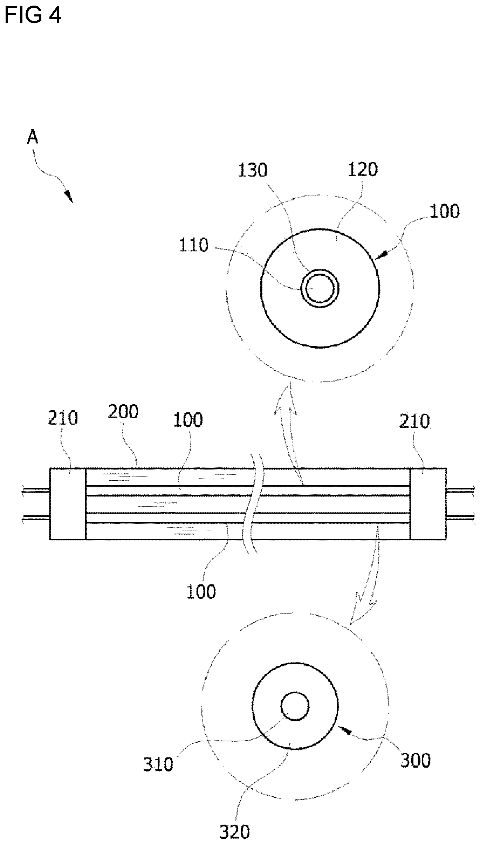

FIG. 4 is a configuration view showing another embodiment of FIG. 3.

Referring to FIG. 4, the heat transfer pipe A for heating of the present invention may further include a carbon heating wire 300 formed inside the heating pipe 200 and operating to be independent from the heating cable 100 for heating.

The carbon heating wire 300 may include a carbon core 310 connected to the external commercial power, and an insulator 320 formed to wrap the carbon core 310.

Meanwhile, when the carbon core 310 of the carbon heating wire 300 is connected to the external power as described above, overheating or burnout may occur when a disconnection occurs in the fiber yarn of the carbon core 310.

However, when the carbon heating wire 300 is heated at a low temperature by controlling the amount of current supplied from the external power, overheating or burnout caused by disconnection of the fiber yarn may be minimized.

Therefore, in the present invention, the carbon heating wire 300 may be used for low temperature, and the heating cable 100 for heating shown in FIGS. 1 and 2 may be used for high temperature.

For example, the heating cable 100 for high-temperature heating may be used for heating in winter, and the carbon heating wire 300 of low-temperature may be used in the case of non-heating to prevent freezing and bursting of the heating pipe 200.

As described above, the present invention may prevent freezing and bursting using minimum electric energy while preventing overheating and burnout during non-heating by using the carbon heating wire 300 for low temperature and, furthermore, continuously emit far infrared rays and anions.

Hereinafter, the configuration and method for controlling the operation of the heating cable 100 for heating of high temperature and the carbon heating wire 300 of low temperature shown in FIG. 4 will be described.

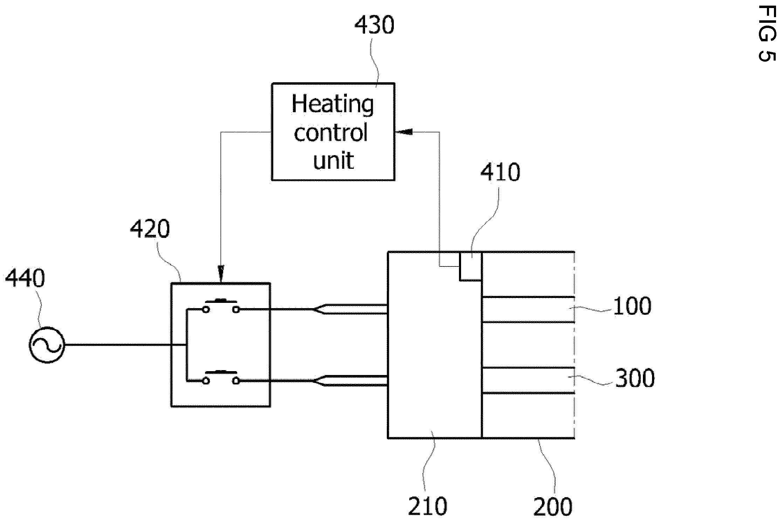

FIG. 5 is a configuration view showing still another embodiment of FIG. 3.

Referring to FIG. 5, the heat transfer pipe A for heating of the present invention includes a water temperature sensor 410, a switching unit 420, and a heating control unit 430.

The water temperature sensor 410 may be formed on one side of the heating pipe 200, for example, on the sealing cover 210, and measure the temperature of the heating water filled inside the heating pipe 200.

The switching unit 420 supplies or blocks the commercial power 440 to or from at least one among the heating cable 100 for heating and the carbon heating wire 300, and although the switching unit 420 is shown outside the sealing cover 210 in FIG. 5, it may be formed inside the sealing cover 210 according to the request of those skilled in the art.

The heating control unit 430 controls operation of the switching unit 420 according to the temperature of the heating water measured by the water temperature sensor 410 to operate at least one among the heating cable for heating and the carbon heating wire, and as described above, the heating control unit 430 may operate the carbon heating wire 300 for low-temperature heating and operate the heating cable 100 for heating for high-temperature heating.

In addition, of course, the heating control unit 430 may be formed inside the sealing cover 210 like the switching unit 420.

For example, the water temperature sensor 410, the switching unit 420, and the heating control unit 430 may be formed as a single module to be coupled to the sealing cover 210.

As another example, the water temperature sensor 410, the switching unit 420, and the heating control unit 430 may be formed inside the sealing cover 210.

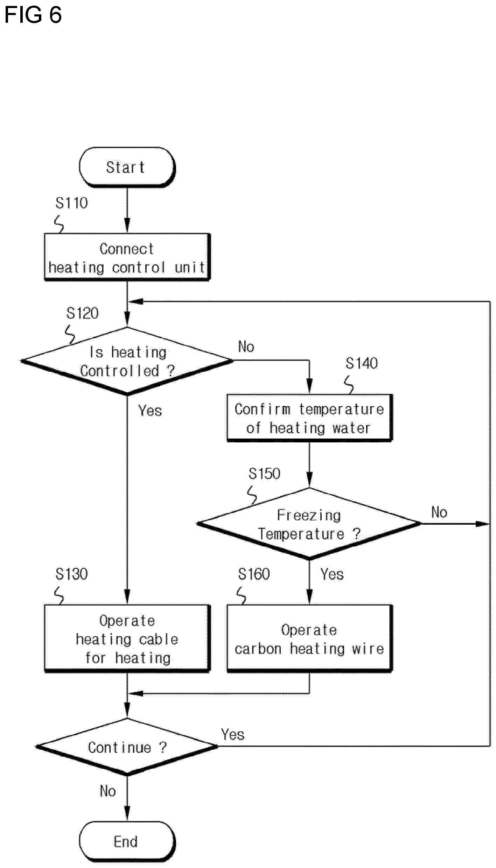

FIG. 6 is a flowchart illustrating an embodiment of a method of controlling the heating control unit shown in FIG. 5.

Referring to FIG. 6, the heating control unit 430 may be connected to perform communication with a heating controller (e.g., a controller in each room or a smartphone) handled by a user through an IoT-based sensor network (S110).

Accordingly, when the user performs heating using the heating controller (S120), the heating control unit 430 may control the operation of the heating cable 100 for heating in response to the user's handling (S130).

When the user turns off heating for reasons such as going out or the like (S120), the heating control unit 430 may be switched to the operation of non-heating.

Accordingly, the heating control unit 430 measures the temperature of the heating water inside the heating pipe 200 through the water temperature sensor 410 (S140), and when the temperature of the heating water falls below the freezing temperature (S150), the heating control unit 430 may operate the carbon heating wire 300 which operates for low temperature (S160) to prevent freezing and bursting of the heating pipe 200.

Meanwhile, since a plurality of heat transfer pipes A for heating is installed in a room, the heating control unit 430 may be formed for each heating pipe 200.

Accordingly, a plurality of heating control units 430 may be connected to an IoT-based sensor network, and at least one of the heating control units may operate to generate heat according to a control signal transmitted from the heating controller of the user.

For example, since all the heat transfer pipes A for heating installed in the floor operate when heating begins, and only heat transfer pipes A for heating installed in the outer area (the areas close to the wall) among all the heat transfer pipes A for heating operate when a desired temperature is reached, it is possible to block inflow of the cold outside air using minimum power and prevent outflow of the indoor heat energy to the outside, and thus indoor temperature may be kept constant.

On the other hand, when the temperature of the outside air rapidly drops during non-heating, such as an extremely cold weather in winter, the carbon heating wire 300 alone may not prevent freezing and bursting of the heating pipe 200 in some cases.

Accordingly, the present invention may operate the heating cable 100 for heating when the temperature of the heating water drops rapidly even during non-heating, and this will be described below.

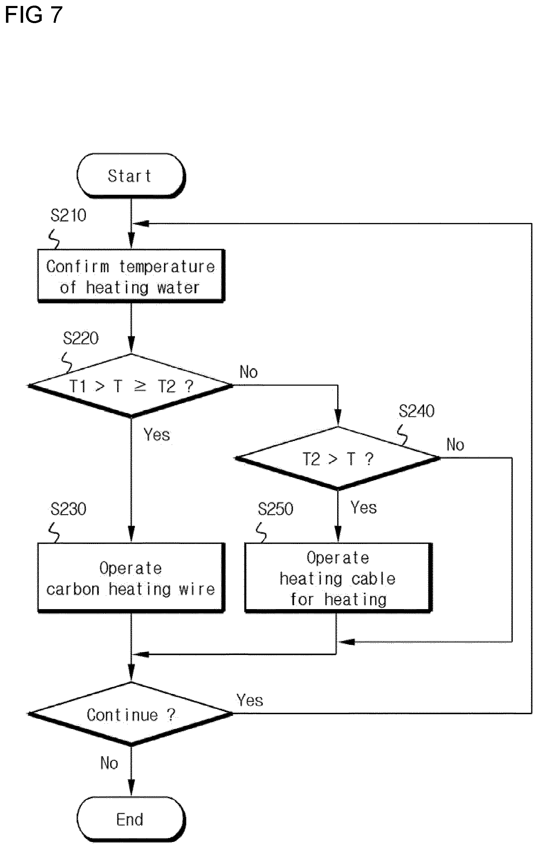

FIG. 7 is a flowchart illustrating another embodiment of FIG. 6.

Referring to FIG. 7, as the heating control unit 430 confirms the temperature of the heating water measured by the water temperature sensor 410 (S210), and operates the carbon heating wire 300 (S230) when the confirmed temperature of the heating water is lower than a freezing temperature T1 and higher than a minimum warming request temperature T2, it may operate in a warming mode. Here, the freezing temperature T1 is a temperature at which the heating water, which is a liquid, is phase-shifted to a solid, and the minimum warming request temperature T2 is the lowest temperature among the temperatures that can maintain a warming state by the carbon heating wire 300.

Thereafter, when the temperature of the heating water measured by the water temperature sensor 410 further drops (S220), e.g., when the temperature is lower than the minimum warming request temperature T2 (S240), the heating control unit 430 operates the heating cable for heating (S250) to prevent freezing and bursting of the heating pipe 200 by supplying further higher heat energy in response to an extremely cold weather.

According to the solutions as described above, the present invention has an advantage of emitting far infrared rays and anions, in addition to heating, by configuring a carbon fiber in a heat transfer pipe for heating used in an electric boiler system for heating using electric energy.

Therefore, the present invention has an advantage of preventing air pollution generated by combustion of fuel and may be greatly helpful for user's healthcare.

Particularly, as a heating wire for receiving power and generating heat is formed and a carbon fiber is formed to absorb heat energy emitted from the heating wire and emit far infrared rays and anions, the present invention has an advantage of helping healthcare although the carbon fiber is not connected to a power supply.

Therefore, the present invention has an advantage of fundamentally preventing the problems generated in a method of directly connecting a power supply to the carbon fiber, while sufficiently emitting far infrared rays and anions using the carbon fiber.

In addition, as the present invention configures a carbon heater for low temperature, in addition to a heating cable for heating for high temperature, and prevents freezing and bursting of the heat transfer pipe by using the carbon heater during non-heating, there is an advantage of preventing freezing and bursting using minimum power during non-heating such as going out.

Accordingly, it is possible to improve reliability and competitiveness in the field of indoor heating, in the field of boiler system, and particularly in the field of heating and boiler system using electricity, as well as in the similar or related fields.

A heating cable for heating according to the present invention and a heat transfer pipe for heating using the same have been described above. It will be understood that the technical configuration of the present invention can be implemented in other specific forms by those skilled in the art without changing the technical spirit or essential features of the present invention.

Therefore, the embodiments described above should be understood in all respects as illustrative and not restrictive.

## Claims

1. A heating cable for heating, the cable comprising:
a heating core disposed at a center of the heating cable to receive commercial power and emit heat;
an insulator forming an outer appearance of the heating cable; and
a carbon fiber formed between the heating core and the insulator to absorb at least some of heat energy emitted from the heating core and emit at least one among anions and far infrared rays.

2. The cable according to claim 1, wherein the carbon fiber is formed to wrap an outer surface of the heating core.

3. The cable according to claim 1, wherein the insulator includes:
a first insulation cloth formed to wrap the heating core; and
a second insulation cloth formed to wrap the first insulator (→ insulation cloth), wherein
the carbon fiber is formed between the first insulation cloth and the second insulation cloth.

4. A heat transfer pipe for heating, the pipe comprising:
a hollow heating pipe, both ends of which are sealed with a sealing cover, filled with heating water inside thereof; and
the heating cable for heating of any one of claims 1 to 3, formed inside the heating pipe.

5. The pipe according to claim 4, wherein the heating core passes through at least one of the two sealing covers formed on both sides of the heating pipe and is connected to an external power, and the carbon fiber is formed in at least a portion between the two sealing covers formed on both sides of the heating pipe.

6. The pipe according to claim 4, further comprising a carbon heating wire formed inside the heating pipe and operating to be independent from the heating cable for heating.

7. The pipe according to claim 6, further comprising:
a water temperature sensor formed on one side of the heating pipe to measure a temperature of the heating water;
a switching unit for supplying or blocking commercial power to or from at least one among the heating cable for heating and the carbon heating wire; and
a heating control unit for controlling operation of the switching unit according to the temperature of the heating water measured by the water temperature sensor to operate at least one among the heating cable for heating and the carbon heating wire.

8. The pipe according to claim 7, wherein the heating control unit operates the carbon heating wire for low-temperature heating, and operates the heating cable for heating for high-temperature heating.

9. The pipe according to claim 8, wherein the heating control unit performs communication with a heating controller handled by a user through an IoT-based sensor network, operates the carbon wire during non-heating, and operates the heating cable for heating during heating.

10. The pipe according to claim 8, wherein the heating control unit operates the carbon heating wire when the temperature of the heating water measured by the water temperature sensor is lower than a freezing temperature and higher than a minimum warming request temperature, and operates the heating cable for heating when the temperature of the heating water is lower than the minimum warming request temperature.
